# EUROPEAN PATENT APPLICATION

(11) **EP 2 400 403 A1**
(43) Date of publication of application: **28.12.2011**
(21) Application number: 10305671.9
(22) Date of filing: 23.06.2010
(51) Int. Cl.: G06F 17/30

(54) **A method, a server, a computer program and a computer program product for providing multimedia content**

(71) Applicant: Alcatel Lucent, 75007 Paris (FR)
(72) Inventor: Baynaud, Erwan, 75013 Paris (FR); Gueret, Olivier, 92310 Sèvres (FR)
(74) Representative: Brose, Gerhard

(57) **Abstract**

The invention concerns a method for providing multimedia content, wherein at least a part of a first multimedia content is selected (200) as a first object, wherein a first position of said first object in a first multimedia content is tracked (202), in particular in space or time, wherein a piece of information is provided (206) with said first multimedia content depending on the result of a comparison (203, 204) of said first object and said first position to at least one template.

## Description

### Field of the invention

The invention relates to a method, a server, a computer program and a computer program product for providing multimedia content.

### Background

In an implementation capable of providing multimedia content, e.g. an image or a video, information about people appearing in said video is displayed next to said video. This information is labeled tag. Tags for images or videos are typically generated by users viewing them by identifying an area of said picture or said video showing a person in said video and entering information about said person into an input field.

However, this way of tagging is cumbersome and unspecific with regard to the position of objects in space and time. Furthermore all persons have to been known to said users.

### Summary

The object of the invention is thus to provide tags for objects that are appropriate for a given object at a given point in time or space.

The main idea of the invention is to provide multimedia content, wherein at least a part of said multimedia content is selected as a first object, wherein a first position of said first object in a first multimedia content is tracked, in particular in space or time, wherein a piece of information, e.g. said tag, is provided with said first multimedia content depending on the result of a comparison of said first object and said first position to at least one template. This way said position and said object itself are considered when determining which tag to provide, e.g. display.

Advantageously said at least one template comprises information about at least one second object and at least one second position of said second object in a second multimedia content, in particular in space or time. This way said tag is provided depending on the similarity between said first object or said first object's position with a known object or a known objects' position.

Advantageously said comparison comprises the step of matching said first position to said at least one second position, in particular in space or time. This way said tag is provided depending on said position of said object in space or time.

Advantageously said comparison comprises the step of matching said first object to said at least one second object. This way a tag is displayed for said first object if it is similar or identical to a known object.

Advantageously said first object is selected depending on a user input. This way a user determines which object to tag.

Advantageously at least part of said piece of information, e.g. said tag, is determined depending on a user input. This way said piece of information, e.g. said tag, is generated or modified by said user.

Advantageously a user input prompt comprises said piece of information, e.g. said tag. This way a user is prompted with a selection menu for selecting which piece of information, e.g. which tag, to provide, e.g. display, with said first multimedia content.

Advantageously a first piece of information, e.g. a first tag, is provided if a first condition is fulfilled and a second piece of information, e.g. a second tag, is provided if a second condition is fulfilled, and wherein said first piece of information, e.g. said first tag, and said second piece of information, e.g. said second tag, are merged upon receipt of a user input, e,g. into a single tag. For example two tags that have similar content and are spaced in time are merged this way to a single tag for the entire time period the two tags were displayed and including the gap.

Advantageously said piece of information, e.g. said tag, comprises of an indication of the result of said comparison. For example an indication of the reliability of said result of said comparison is displayed next to said tag.

Advantageously a user input prompt comprises an indication of the result of said comparison. For example an indication of the reliability of said result of said comparison is displayed next to a list of proposed tags in a user prompt requesting to confirm which tag to assign to said object. Said list may be sorted depending on said reliability of said proposed tag.

Advantageously said first multimedia content is received from a client. This way said first multimedia content is uploaded.

Advantageously information about at least a part of said at least one template is received from at least one server. This way not only local information about templates is used, but also information stored on other servers is made available.

Advantageously information about a second object is received and said at least one template is determined depending on said information about said second object. This way not only local information about known objects is used, but also known objects stored on other servers are made available.

Advantageously a predetermined type of said piece of information, e.g. said tag, is linked to an address of said at least one server. This way a server suitable to deliver information about known objects of certain type is directly addressed.

Further developments of the invention can be gathered from dependent claims and the following description.

### Brief description of the figures

In the following the invention will be explained further making reference to the attached drawings.

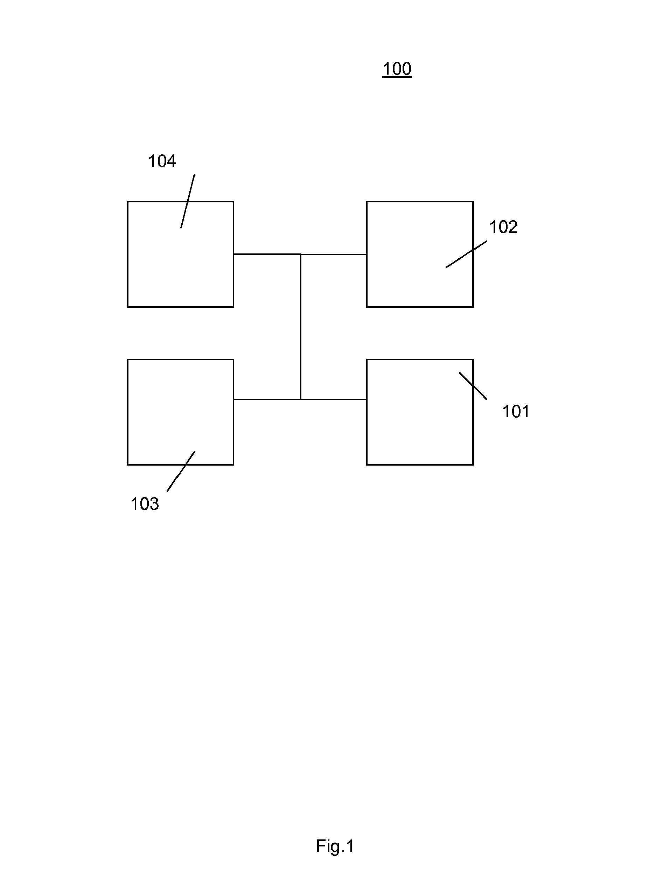

Fig. 1 schematically shows a first server.

Fíg. 2 schematically shows a flow chart.

### Description of the embodiments

Figure 1 shows a first server 100. Said server comprises a processor 101, a network interface 102, a non-volatile storage 103, a volatile storage 104 and a data bus connecting all of the aforementioned parts of said server 100.

Said server 100 is adapted to connect to a computer network via said network interface 102. Said connection is for example established using the Transmission Control Protocol/Internet Protocol (TCP/IP) or any other suitable network protocol, e.g. according to IEEE 802.11 or Ethernet standard.

Said server 100 is adapted to provide multimedia content, stored for example on said non-volatile storage 103, to any number of clients or servers in said computer network. To this end for example software executes on said server 100 that reads said first multimedia content from said non-volatile storage 102 and sends it via said network interface 102. This kind of software is well known to a person skilled in the art, e.g. from the Hyper Text Markup Language 5 Video tag (W3C working draft 4 March 2010 http://www.w3.org/TR/html15/) and not explained here any further.

Said first server may be adapted to receive said first multimedia content via said network interface 102 and store it on said non-volatile storage 103.

Said multimedia content may comprise audio, video, a document or slide of a presentation or a combination thereof.

Said server 100 is adapted to select at least a part of said first multimedia content as a first object.

Said server 100 is adapted to track a first position of said first object in a first multimedia content in space or time. Said server 100 may be adapted to track said first position in space and time as well.

For example software executes on said server 100 that identifies said first object as a first area of pixels that has a predetermined color or shape, e.g. in subsequent first frames of a first video. For example said first area of pixels resembles the shape of furniture, e.g. a chair, a person, e.g. a face, or a car. This kind of software is well known to a person skilled in the art from pattern recognition or object tracking algorithms like a face tracker build using the well known Open Source Computer Vision library Version 2.0 (OpenCV 2.0) and not explained here any further.

Furthermore said server 100 is adapted to provide a piece of information, e.g. a tag, with said multimedia content depending on the result of a comparison of said first object and said first position to at least one template.

Said piece of information, e.g. said tag, is for example a Unicode string, resembling descriptive information about said first object.

Said tag may be a video, an image, Unicode Braille or audio as well.

Providing said piece of information, e.g. said tag, with said multimedia content in this context means to display said piece of information, e.g. said tag, or to send said piece of information, e.g. said tag, via said network interface 102.

For example augmented reality software or video overlay software like Microsoft Direct Show executes on said server 100 that displays said piece of information, e.g. said tag, next to an area that contains said first object, e.g. in said first frame of said first video.

Furthermore said server 100 is adapted to receive information about at least a part of said template from at least one other server via said network interface 102. Messaging and data transfer between said server 100 and said at least one other servers is for example done according to the well known Hyper text transport protocol (HTTP). Any other form of messaging or data transfer may be used as well. For example an Application Programming Interface (API) may be used instead.

Such Hyper text transport protocol (HTTP) interfaces or Application Programming Interfaces (API) are defined and operated by providers of said other servers, e.g. providers of an online social network, an online market place or an online store.

Furthermore said server 100 is adapted to store said at least one template, e.g. in a data base.

For example said at least one template comprises information about at least one second object or at least one second position of said second object in a second multimedia content in space or time. Said at least one template may comprise information about said at least one second position in space and time as well. Said at least one second object is for example a second area of pixels in a second frame of a second video. Said second position is for example a second pixel position of said second area of pixels in said second frame or a second display time of sad second frame within said second video.

Furthermore said server 100 is adapted to store said piece of information, e.g. said tag. Said server 100 for example comprises said data base adapted to store said piece ot information and associate said piece of information to said second object.

Furthermore said server 100 is adapted to store a link between a predetermined type of said piece of information, e.g. said tag, to an address of said at least one other server. Said link is for example stored on said non-volatile storage 103 in said database as association of said predetermined type of said piece of information, e.g. said tag, to said address. Said address is for example an Internet Protocol (IP) address. Said predetermined type is for example a Unicode string describing said piece of information, e.g. said tag.

Possible values of said Unicode string describing said piece of information are given in the following non exhaustive list:

People from said online social network,

Cars from said online market place,

Furniture from said online store.

Furthermore said server 100 comprises a user interface, e.g. via a graphical user interface, e.g. a touch screen. Said user interface is adapted to prompt a client for input and receive user input from said client. Alternatively or additionally said server 100 may comprise a remotely accessible user interface, e.g. Webpage.

Said Unicode strings are received by said server 100 for example via said user input.

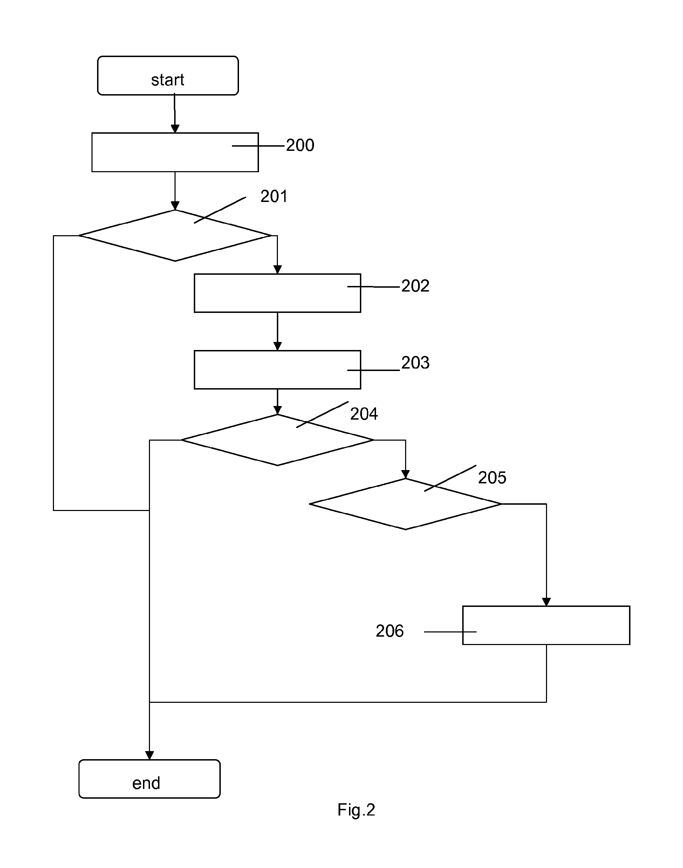

A method for providing tags that are appropriate for a given object at a given point in time or space, in particular for objects recognized in said first multimedia content, is described below making reference to the flow chart in figure 2.

Said method starts, for example, whenever said first frame of said first multimedia content is provided, e.g. displayed or sent. Said first multimedia content is in this example displayed by said graphical user interface of said server 100. Said method applies also to any other type of display as well as in case said client receives said multimedia content, e.g. in a media stream, and displays it.

Said method may start as well at any time during displaying of said first multimedia content, for example if user input, e.g. a finger touch on said touch screen indicating that tags shall be provided for objects currently in the same area in that said finger touch was recognized by said server 100.

After the start a step 200 is executed.

In said step 200 said first multimedia content is analyzed in order to detect said first object and to select said at least one part of said multimedia content as said first object. Said first object is detected for example depending on a user input, e.g. said finger touch on said touch screen. For example said first frame of said first video is analyzed to identify said first object. For example near to said finger touch on said touch screen in said first frame said first area of pixels that resembles the shape of said furniture, e.g. said chair, said person, e.g. said face, or said car is detected and then selected as said at least one part of said multimedia content. Afterwards a step 201 is executed.

In said step 201 a test is performed to determine if at least said part of said multimedia content is selected as a first object. Tn case at least said part of said multimedia content is selected, a step 202 is executed. Otherwise no first object was selected and said method ends, e.g. with an optional error message.

In said step 202 said first position of said first object in said first multimedia content is tracked. Tracking in this context means that said first position is determined in space or time. Tracking may mean that said first position is determined in space and time. Tracking may include storing said first position on said non-volatile storage 103 or said volatile storage 104 as variable. For example said first said first position is determined as a first pixel position of said first area of pixels in said first frame or a first display time of said first frame within said first video. Afterwards a step 203 is executed.

In said step 203 a comparison of said first object and said first position to at least one template is conducted.

For example said at least one template comprises information about said at least one second object or said at least one second position of said second object in said second multimedia content in space or time. Said at least one second object is for example said second area of pixels in said second frame of said second video. Said second position is for example said second pixel position of said second area of pixels in said second frame or said second display time of sad second frame within said second video.

Said comparison comprises for example the step of matching said first position to said at least one second position. For example said pixel positions or said display times are compared.

Said comparison comprises for example the step of matching said first object to said at least one second object, e.g. using pattern recognition on said areas of pixels.

A matching template is found for said first object, for example if said first object or said first object's position in said first multimedia content is similar to said at least one second object or said at least one second object's position in said second multimedia content.

Afterwards a step 204 is executed.

In said step 204 a test is performed to determine if a matching template was found for said first object. In case a matching template was found a step 205 is executed. Otherwise said method ends, e.g. with an error message.

In said step 205 a test is performed to determine, if said piece of information, e.g. said tag, is available for said second object, for example in said data base. In case said piece of information, e.g. said tag, is available, a step 206 is executed. Otherwise said method ends, e.g. with an error message.

In said step 206 said piece of information, e.g. said tag, is provided. For example said piece of information, e.g. said tag, is displayed in said first frame of said first video.

Providing in this context means for example that on said touch screen said piece of information, e.g. said tag, is displayed next to said first area of pixels containing said first object. Afterwards said method ends.

Alternatively or additionally in a first separate step that may be executed at any time during said method at least part of said at least one template is determined. In particular said first separate step may be executed after said step 204 in the case that no matching template is found for said first object.

In said first separate step for example a first user input prompt is displayed next to said first object on said touch screen. Said first user input prompt is adapted to request the information required for creating a new template and adding said first object as one of said second objects associated with said new template. Said server 100 is in this case adapted to display said first user input prompt and to store said new template as one of said at least one template. Said user input may be completed by an auto-completion mechanism suggesting possible content of said template as well.

Afterwards said step 205 may be executed or said method may end.

Said first separate step is not required for said method but allows a user to add previously unknown first objects as one of said at least one second objects and the respective template.

Alternatively or additionally in a second separate step that may be executed at any time during said method at least part of said piece of information, e.g. said tag, is determined depending on user input. In particular said second separate step may be executed after said step 205 in the case that no piece of information is available for said second object.

In said second separate step for example a second user input prompt is displayed next to said piece of information, e.g. said tag, on said touch screen that comprises said piece of information, e.g. said tag. Said second user input prompt allows creating a new piece of information. Said server 100 is in this case adapted to display said second user input prompt to store said new piece of information as said piece of information, e.g. said tag, and to associate said piece of information with said second object in said data base. Said user input may be completed by an auto-completion mechanism suggesting possible content of said piece of information as well.

Afterwards said step 206 may be executed or said method may end.

Said second separate step is not required for said method but allows a user to add new tags.

Additionally any of said user input prompts may comprise an indication of a result of said comparison. For example an indication of the reliability of said result of said comparison is displayed next to a list of proposed tags in a user prompt requesting to confirm which tag to assign to said object. Said list may be sorted depending on said reliability of said proposed tag. Said server 100 is in this case adapted to display said indication, to store and to change said list.

Alternatively or additionally said piece of information, e.g. said tag, comprises of an indication of said result of said comparison. For example an indication of the reliability of said result of said comparison is displayed next to said piece of information, e.g. said tag. Said server 100 in in this case adapted to display said indication.

Alternatively or additionally a first piece of information, e.g. said first tag, is provided if a first condition is fulfilled and a second piece of information, e.g. said second tag, is provided if a second condition is fulfilled and said first piece of information, e.g. said first tag, and said second piece of information, e.g. said second tag, are merged upon receipt of user input indicating that said first piece of information and said second piece of information shall be merged. Merging in this context means that for example a first Unicode string resembling said first piece of information, e.g. said first tag, and a second Unicode string resembling said second piece of information, e.g. said second tag, are merged to a single Unicode string. Said server 100 is in this case adapted to perform all necessary steps.

Optionally said first multimedia content is received by said server 100 from a client in a third separate step that is executed for example before step 200. Said third separate step is not required for said method but this way said first multimedia content is uploaded from said client to said server 100.

After said third separate step for example said step 200 is executed.

Additionally in a fourth separate step that is executed for example after said step 202, said information about said at least one part of said at least one template is from said at least one server.

To this end, a third user input prompt is displayed to request said type of said piece of information.

Upon receipt of user input identifying said type of said piece of information said link between said predetermined type of said piece of information and said address of said at least one other server is looked up.

In this case said server 100 is adapted to display said third user prompt asking for user input regarding said type of said piece of information on said touch screen.

Furthermore in this fourth separate step a request to receive said information about said at least one part of said at least one template is determined and sent to said at least one other server using said address.

For example information about said second object, e.g. said second area of pixel, is received as said information about said at least one part of said at least one template. In this case said at least one template is determined depending on said information about said second object.

Said step 203 in this case may be executed upon receipt of said information about said at least one part of said at least one template from said at least one other server. Said method may end in case said information about said at least one part of said template is not received from said at least one other server within a predetermined period of time, e.g. 1 second.

Additionally or alternatively said first object may be detected and tracked automatically by said server 100 without user input.

Optionally in case no object is detected or tracked automatically, user input may be prompted for and used in order to determine information about said first object or said first position of said first object.

Additionally said information about said first object or said first position of said first object may be stored on said server 100 or on said at least one other server, in particular as said second object, said second position or as part of said at least one template.

A computer program may be used to perform any of the aforementioned steps of said method and any additional, alternative or optional steps. In this case said computer program may be stored on said non-volatile storage 103 and loaded to said volatile storage 104 at least partially while executing on said server 100. A computer program product comprising said computer program may be used to store said computer program as well.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for providing multimedia content, wherein at least a part of a first multimedia content is selected (200) as a first object, wherein a first position of said first object in a first multimedia content is tracked (202), in particular in time or space, wherein a piece of information is provided (206) with said first multimedia content depending on the result of a comparison (203, 204) of said first object and said first position to at least one template.

2. The method according to claim 1, wherein said at least one template comprises information about at least one second object and at least one second position of said second object in a second multimedia content, particular in time or space.

3. The method according to claim 2, wherein said comparison comprises the step of matching said first position to said at least one second position, in particular in time or space.

4. The method according to claim 2, wherein said comparison comprises the step of matching said first object to said at least one second object.

5. The method according to claim 1, wherein said first object is selected depending on a user input.

6. The method according to claim 1, wherein at least part of said piece of information is determined depending on a user input.

7. The method according to claim 1, wherein a user input prompt comprises said piece of information.

8. The method according to claim 1, wherein a first piece of information is provided if a first condition is fulfilled and a second piece of information is provided if a second condition is fulfilled, and wherein said first piece of information and said second piece of information are merged upon receipt of a user input.

9. The method according to claim 1, wherein said piece of information comprises of an indication of the result of said comparison.

10. The method according to claim 1, wherein a user input prompt comprises an indication of the result of said comparison.

11. The method according to claim 1, wherein said first multimedia content is received from a client.

12. The method according to claim 1, wherein information about at least one part of said at least one template is received from at least one server.

13. The method according to claim 12, wherein information about a second object is received and said at least one template is determined depending on said information about said second object,

14. The method according to claim 12, wherein a predetermined type of said piece of information is linked to an address of said at least one server.

15. A server for providing multimedia content, adapted to select (200) at least a part of a first multimedia content as a first object, to track (202) a first position of said first object in a first multimedia content, in particular in space or time, to provide (206) a piece of information with said first multimedia content depending on the result of a comparison (203, 204) of said first object and said first position to at least one template.

16. The server according to claim 15, adapted to receive information about at least a part of said template from at least one other server.

17. The server according to claim 15, wherein a predetermined type of said piece of information is linked to an address of said at least one other server.

18. A computer program for providing multimedia content, wherein said computer program, when executed on a computer, causes the computer to select (200) at least a part of a first multimedia content as a first object, to track (202) a first position of said first object in a first multimedia content, in particular in space or time, to provide (206) a piece of information with said first multimedia content depending on the result of a comparison (203, 204) of said first object and said first position to at least one template.

19. A computer program product for providing multimedia content, comprising a computer usable medium having a computer readable program, wherein said computer readable program, when executed on a computer, causes the computer to select (200) at least a part of a first multimedia content as a first object, to track (202) a first position of said first object in a first multimedia content, in particular in space or time, to provide (206) a piece of information with said first multimedia content depending on the result of a comparison (203, 204) of said first object and said first position to at least one template.
